# EUROPÄISCHE PATENTANMELDUNG

(11) **EP 3 023 429 A1**
(43) Veröffentlichungstag der Anmeldung: **25.05.2016**
(21) Anmeldenummer: 14194597.2
(22) Anmeldetag: 24.11.2014
(51) Int. Cl.: C07F 7/18

(54) **Hydroxysilan als Haftvermittler oder Vernetzer**

(71) Anmelder: Sika Technology AG, 6340 Baar (CH)
(72) Erfinder: Burckhardt, Urs, 8049 Zürich (CH); Kramer, Andreas, 8006 Zürich (CH)
(74) Vertreter: Sika Patent Attorneys

(57) **Zusammenfassung**

Die vorliegende Erfindung betrifft die Verwendung eines Hydroxysilans der Formel (I) als Haftvermittler oder Vernetzer für Klebstoffe oder Dichtstoffe oder Beschichtungen. Weiterhin betrifft die Erfindung eine Haftvermittler-Zusammensetzung enthaltend das Hydroxysilan der Formel (I) sowie Klebstoffe oder Dichtstoffe oder Beschichtungen enthaltend das Hydroxysilan der Formel (I). Das Hydroxysilan der Formel (I) ist überraschend lagerstabil und zeigt eine gute Wirkung als Haftvermittler und/oder Vernetzer.

## Beschreibung

### Technisches Gebiet

Die Erfindung betrifft Hydroxysilane und deren Verwendung als Haftvermittler oder Vernetzer für Klebstoffe oder Dichtstoffe oder Beschichtungen.

### Stand der Technik

Organosilane mit einer zusätzlichen funktionellen Gruppe werden oft in Dichtstoffen, Klebstoffen, Beschichtungen und Vorbehandlungsmitteln wie Primern oder Haftvermittler-Lösungen eingesetzt. Sie dienen dabei als Haftvermittler oder Vernetzer.

Typische Organosilane, welche als Haftvermittler oder Vernetzer verwendet werden, sind Mercaptosilane oder Aminosilane. Diese weisen aber Nachteile auf. Mercaptosilane haben einen unangenehmen Geruch und bilden mit Isocyanaten thermisch nicht sehr beständige Thiourethane, welche bei erhöhter Temperatur leicht rückspaltbar sind. Aminosilane sind basisch und sehr reaktiv, was ihre Verwendung als Haftvermittler limitiert.

Aus dem Stand der Technik wenig bekannt sind Hydroxysilane. Deren Handhabung weist die Schwierigkeit auf, dass sie aufgrund einer schnellen Reaktion der Hydroxylgruppe mit der Silangruppe zur Selbstkondensation neigen und deshalb häufig sehr unrein und/oder wenig lagerstabil sind. Als Haftvermittler und Vernetzer wären sie aber interessant, da ihre Reaktivität nicht ganz so hoch ist, was die Wirkung als Haftvermittler oft verbessert. Zudem ermöglicht die Hydroxylgruppe haftvermittelnde Wechselwirkungen mit mineralischen Untergründen.

Aus US 5,587,502 sind Hydroxycarbamoylsilane bekannt, welche aber nach der Herstellung nicht sehr rein sind und eine eingeschränkte Lagerstabilität aufweisen.

### Darstellung der Erfindung

Aufgabe der vorliegenden Erfindung ist es daher, ein Hydroxysilan für die Verwendung als Haftvermittler oder Vernetzer für Klebstoffe oder Dichtstoffe oder Beschichtungen zur Verfügung zu stellen, welches eine gute Lagerstabilität aufweist und gute Haftungseigenschaften ermöglicht. Überraschenderweise wurde gefunden, dass ein Hydroxysilan der Formel (I) wie in Anspruch 1 beschrieben diese Aufgabe erfüllt.

Das Hydroxysilan der Formel (I) ist in einem einfachen Verfahren in sehr hoher Reinheit herstellbar und ist überraschenderweise hervorragend lagerstabil, auch wenn es sehr reaktive Trimethoxysilangruppen aufweist. Es zeigt eine gute Wirkung als Haftvermittler oder Vernetzer für Klebstoffe oder Dichtstoffe oder Beschichtungen. Dafür kann es als Bestandteil einer Haftvermittler-Zusammensetzung für die Vorbehandlung von Substraten, auf welche der Klebstoff oder Dichtstoff oder die Beschichtung appliziert werden, vorhanden sein, oder es kann als Bestandteil des Klebstoffs oder Dichtstoffs oder der Beschichtung selber vorhanden sein, wo es als Haftvermittler und/oder Vernetzer wirkt. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Hydroxysilans der Formel (I) als Haftvermittler oder Vernetzer für Klebstoffe oder Dichtstoffe oder Beschichtungen, 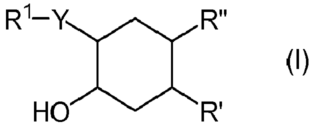 wobei
entweder R' für einen Rest der Formel (II) und R" für einen Wasserstoff-Rest oder R' für einen Wasserstoff-Rest und R" für einen Rest der Formel (II) stehen; 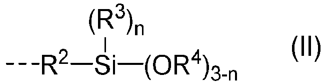
R¹ für einen aliphatischen oder cycloaliphatischen oder arylaliphatischen Kohlenwasserstoff-Rest mit 1 bis 18 C-Atomen, welcher gegebenenfalls Heteroatome in Form von Ether-Sauerstoff, Ester-Sauerstoff, Thioether-Schwefel oder sekundärem oder tertiärem Amin-Stickstoff aufweist, und welcher gegebenenfalls eine Silangruppe aufweist, steht;
R² für einen linearen oder verzweigten Alkylen- oder Cycloalkylen-Rest mit 1 bis 20 C-Atomen, gegebenenfalls mit aromatischen Anteilen, und gegebenenfalls mit einem oder mehreren Heteroatomen, steht;
R³ für einen Alkyl-Rest mit 1 bis 8 C-Atomen steht;
R⁴ für einen aliphatischen oder cycloaliphatischen oder arylaliphatischen Kohlenwasserstoff-Rest mit 1 bis 12 C-Atomen, welcher gegebenenfalls einen oder zwei Ether-Sauerstoffe aufweist, steht;
Y für O oder für S oder NR⁰ steht, wobei R⁰ für ein Wasserstoffatom oder für einen eine Silangruppe aufweisenden Alkyl-Rest mit 1 bis 12 C-Atomen steht; und
n für 0 oder 1 oder 2 steht.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom. Als "Methoxysilangruppe" wird eine Silangruppe bezeichnet, die als Alkoxy-Reste ausschliesslich Methoxy-Reste aufweist. Als "Ethoxysilangruppe" wird eine Silangruppe bezeichnet, die als Alkoxy-Reste ausschliesslich Ethoxy-Reste aufweist.

Der Begriff "Alkoxysilan" oder kurz "Silan" bezeichnet eine organische Verbindung, welche mindestens eine Silangruppe aufweist.

Als "Hydroxysilan", "Epoxysilan", "Isocyanatosilan", "Aminosilan" bzw. "Mercaptosilan" werden Silane bezeichnet, die am organischen Rest zusätzlich zur Silangruppe eine oder mehrere Hydroxyl-, Epoxy-, Isocyanato-, Amino- bzw. Mercaptogruppen aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von 23 °C bezeichnet.

Das Hydroxysilan der Formel (I) entspricht entweder der Formel (Ia) oder der Formel (Ib).

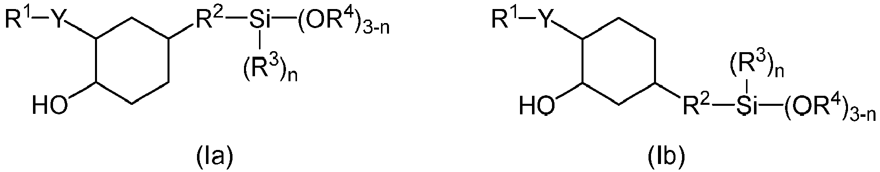

In den Formeln (Ia) und (Ib) weisen R¹, R², R³, R⁴, Y und n die bereits genannten Bedeutungen auf.

Die Formeln (Ia) und (Ib) umfassen alle für die jeweilige Struktur möglichen Diastereomere.

Bevorzugt steht Y für O oder für NR⁰. Diese Hydroxysilane sind vom Geruch her vorteilhaft.

Besonders bevorzugt steht Y für O und R¹ steht für einen aliphatischen oder cycloaliphatischen oder arylaliphatischen Kohlenwasserstoff-Rest mit 1 bis 12, insbesondere 1 bis 8, C-Atomen, welcher gegebenenfalls ein oder zwei Ether-Sauerstoffe aufweist.

Insbesondere steht Y für O und R¹ steht für einen Methyl-Rest oder für einen Ethyl-Rest.

Weiterhin besonders bevorzugt steht Y für NR⁰, R⁰ steht für ein Wasserstoffatom und R¹ steht für einen aliphatischen oder cycloaliphatischen oder arylaliphatischen Kohlenwasserstoff-Rest mit 1 bis 12, insbesondere 1 bis 8, C-Atomen, welcher gegebenenfalls ein oder zwei Ether-Sauerstoffe oder ein oder zwei sekundäre oder tertiäre Aminogruppen aufweist.

Insbesondere steht R¹ dabei für n-Propyl, Isopropyl, n-Butyl, sek.Butyl, tert.Butyl, Isopentyl, n-Hexyl, n-Octyl, 2-Ethylhexyl, Cyclohexyl, Benzyl, Phenylethyl, 2-Methoxyethyl, 2-Ethoxyethyl, 3-Methoxypropyl, 3-Ethoxypropyl, 3-(2-Methoxyethoxy)propyl oder N,N-Dimethyl-3-aminopropyl.

In einer weiteren bevorzugten Ausführungsform der Erfindung steht Y für S oder NR⁰ und R¹ steht für einen aliphatischen Kohlenwasserstoffrest mit 1 bis 12 C-Atomen, welcher eine Silangruppe und gegebenenfalls eine sekundäre Aminogruppe aufweist. Diese Hydroxysilane sind besonders geeignet als Vernetzer.

Insbesondere steht R¹ dabei für 3-Trimethoxysilylpropyl, 3-Triethoxysilylpropyl, 3-Trimethoxysilylpropylaminoethyl oder 3-Triethoxysilylpropylaminoethyl. Insbesondere steht R⁰ dabei für ein Wasserstoff-Atom oder für 3-Trimethoxysilylpropyl oder für 3-Triethoxysilylpropyl.

Bevorzugt steht R² für einen Alkylen-Rest mit 1 bis 6 C-Atomen, insbesondere für einen 1,2-Ethylen-Rest.

Bevorzugt steht R³ für einen Methyl-Rest.

Bevorzugt steht R⁴ für einen Methyl-Rest oder für einen Ethyl-Rest. Diese Hydroxysilane sind besonders reaktiv.

R⁴ steht insbesondere für einen Methyl-Rest. Diese Hydroxysilane sind mit Feuchtigkeit besonders reaktiv.

R⁴ steht weiterhin insbesondere für einen Ethyl-Rest. Diese Hydroxysilane spalten bei ihrer Hydroxyse kein Methanol ab, was aus toxikologischen Gründen vorteilhaft ist.

Bevorzugt steht n für 0 oder 1, insbesondere für 0.

Die bevorzugten Hydroxysilane sind besonders gut zugänglich und in besonders reiner Qualität herstellbar.

Bevorzugt wird das Hydroxysilan der Formel (I) durch Umsetzung von mindestens einem Epoxysilan der Formel (II) mit mindestens einem Alkohol oder Thiol oder Amin der Formel (III) hergestellt.

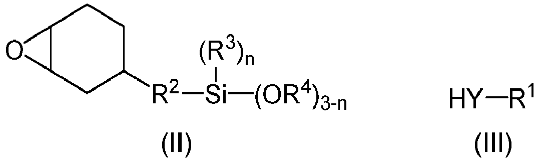

In den Formeln (II) und (III) weisen R¹, R², R³, R⁴, Y und n die bereits genannten Bedeutungen auf.

Ein Alkohol oder Thiol oder Amin der Formel (III) kann dabei entweder an den Kohlenstoff in 2-oder in 3-Stellung zum C-Atom, an welches der Silangruppen-haltige Substituent gebunden ist, addiert werden, wodurch entweder ein Hydroxysilan der Formel (Ia) oder ein Hydroxysilan der Formel (Ib) entsteht. Aus dieser Umsetzung werden typischerweise Mischungen aus den zwei Hydroxysilanen der Formel (Ia) und (Ib) erhalten.

Das Reaktionsprodukt aus dieser Umsetzung ist besonders geeignet für die beschriebene Verwendung als Haftvermittler oder Vernetzer.

Die Umsetzung wird bevorzugt bei Temperaturen im Bereich von 50 bis 140 °C, insbesondere 70 bis 120 °C, durchgeführt.

Für den Fall, dass ein Alkohol der Formel (III) eingesetzt wird, wird dieser bevorzugt so gewählt, dass der Rest R¹ gleich ist wie der Rest R⁴ des Epoxysilans der Formel (II). Der Alkohol der Formel (III) wird bevorzugt stöchiometrisch oder überstöchiometrisch in Bezug auf das Epoxysilan der Formel (II) eingesetzt. Insbesondere wird mit einem Alkohol/Epoxysilan-Verhältnis im Bereich von 1.0 bis 6.0, bevorzugt 2.0 bis 5.0, gearbeitet.

Für den Fall, dass ein Amin der Formel (III) eingesetzt wird, wird dieses bevorzugt stöchiometrisch oder überstöchiometrisch in Bezug auf das Epoxysilan der Formel (II) eingesetzt. Insbesondere wird mit einem Amin/Epoxysilan-Verhältnis im Bereich von 1.0 bis 2.0, bevorzugt 1.0 bis 1.5, gearbeitet.

Für den Fall, dass ein Thiol der Formel (III) eingesetzt wird, wird dieses bevorzugt unterstöchiometrisch oder stöchiometrisch in Bezug auf das Epoxysilan der Formel (II) eingesetzt. Insbesondere wird mit einem Thiol/Epoxysilan-Verhältnis im Bereich von 0.5 bis 1.0, bevorzugt 0.8 bis 1.0, gearbeitet. Überschüssiges Thiol kann zu geruchlichen bzw. toxikologischen Problemen führen. Bei der Umsetzung kann ein Katalysator eingesetzt werden, insbesondere ein Imidazol, ein Hydroxyalkylamin, ein Alkohol, ein Phenol, eine Bronsted-Säure wie insbesondere Essigsäure oder Methansulfonsäure, eine Lewis-Säure wie insbesondere Aluminium(III)-acetylacetonat, Aluminium(III)-isopropoxid, Aluminium(III)-ethoxid, Lanthan(III)-triflat, Zinkdichlorid oder Zink-bis(ethylhexanoat), oder ein Metallsalz wie insbesondere Natriumdodecylsulfat oder Lithiumperchlorat.

Bevorzugt werden nach der Umsetzung allfällig vorhandene flüchtige Verbindungen, insbesondere überschüssiger Alkohol und/oder überschüssiges Amin, aus dem Reaktionsprodukt entfernt, insbesondere durch Destillation.

Wird ein Alkohol der Formel (III) eingesetzt, bei welchem sich der Rest R¹ vom Rest R⁴ der Silangruppe unterscheidet, so können während der Herstellung Umesterungsreaktionen an der Silangruppe auftreten, wobei Hydroxysilane mit Alkoxysilangruppen, welche abgeleitet sind vom eingesetzten Alkohol der Formel (III), entstehen.

Das aus der bevorzugten Ausführung der Umsetzung erhaltene Reaktionsprodukt enthält typischerweisemindestens 80 Gewichts-%, insbesondere mindestens 85 Gewichts-%, Hydroxysilane der Formel (I). Die hohe Reinheit ist überraschend, weisen Hydroxysilane nach dem Stand der Technik doch typischerweise Gehalte an Verunreinigungen von 20 oder mehr Gewichts-% auf.

Als Epoxysilan der Formel (II) wird bevorzugt ein *β*-(3,4-Epoxycyclohexyl)-ethyltrialkoxysilan eingesetzt. Besonders geeignet sind *β*-(3,4-Epoxycyclohe-xyl)ethyltrimethoxysilan, kommerziell erhältlich beispielsweise als Silquest^{®} A-186 (von Momentive Performance Materials), oder *β*-(3,4-Epoxycyclohexyl)-ethyltriethoxysilan, kommerziell erhältlich beispielsweise als CoatOSil^{®} 1770 (von Momentive Performance Materials).

Als Alkohol der Formel (III) geeignet sind aliphatische oder cycloaliphatische oder arylaliphatische Alkohole, insbesondere Methanol, Ethanol, 1-Propanol, Isopropanol, 1-Butanol, 2-Butanol, Isobutanol, 1-Pentanol (Amylalkohol), Isopentanol (Isoamylalkohol), 2-Methyl-1-butanol, 2-Pentanol, 3-Pentanol, 1-Hexanol, 2-Methyl-1-pentanol, 4-Methyl-2-pentanol, 2-Ethyl-1-butanol, 1-Heptanol, 1-Octanol, 2-Ethyl-1-hexanol, 1-Nonanol, 1-Decanol, 1-Undecanol, 1-Dodecanol, 1-Methoxy-2-propanol, 2-Methoxyethanol (Methylglykol), 2-(2-Methoxyethoxy)ethanol (Methyldiglykol), Cyclohexanol, 2-Methylcyclohexanol, 4-Methylcyclohexanol, Benzylalkohol, 2-Methylbenzylalkohol, 4-Methylbenzylalkohol, 4-Ethylbenzylalkohol, 4-Isopropylbenzylalkohol, 4-tert.Butylbenzylalkohol, 4-Methoxybenzylalkohol, N,N-Dimethylethanolamin, N,N-Diethylethanolamin, N,N-Dibutylethanolamin oder N-(2-Hydroxyethyl)morpholin.

Davon bevorzugt ist Methanol, Ethanol, Isopropanol, 1-Butanol, Isobutanol, 1-Pentanol, 1-Hexanol, 2-Methoxyethanol, 2-(2-Methoxyethoxy)ethanol, Cyclohexanol oder Benzylalkohol.

Besonders bevorzugt ist Methanol oder Ethanol.

Besonders vorteilhaft wird beim Einsatz eines Epoxysilans mit Methoxysilangruppen mit Methanol und beim Einsatz eines Epoxysilans mit Ethoxysilangruppen mit Ethanol als Alkohol der Formel (III) gearbeitet.

Als Thiol der Formel (III) geeignet sind aliphatische oder cycloaliphatische oder arylaliphatische Thiole, insbesondere 2-(2-Methoxyethoxy)ethanthiol, Thioglycolsäuremethylester, Thioglycolsäureethylester, Thioglycolsäure-2-ethylhexylester, 3-Mercaptopropionsäuremethylester, 3-Mercaptopropionsäureethylester oder 3-Mercaptopropionsäure-2-ethylhexylester, oder Mercaptosilane wie insbesondere 3-Mercaptopropyltrimethoxysilan oder 3-Mercaptopropyltriethoxysilan. Davon bevorzugt ist 2-(2-Methoxyethoxy)ethanthiol, Thioglycolsäure-2-ethylhexylester, 3-Mercaptopropyltrimethoxysilan oder 3-Mercaptopropyltriethoxysilan, insbesondere 3-Mercaptopropyltrimethoxysilan oder 3-Mercaptopropyltriethoxysilan.

Als Amin der Formel (III) geeignet sind aliphatische, cycloaliphatische und arylaliphatische primäre Amine und Aminosilane, insbesondere Ethylamin, die isomeren Propylamine, Butylamine, Pentylamine, Hexylamine, Octylamine oder Decylamine, weiterhin Cyclohexylamin, Benzylamin, Phenylethylamin, 2-oder 4-Methoxyphenylethylamin, Homoveratrylamin, weiterhin Fettamine wie insbesondere Cocoalkylamin, N-Cocoalkyl-1,3-propandiamin, Oleylamin, weiterhin Etheramine wie insbesondere 2-Methoxyethylamin, 2-Ethoxyethylamin, 3-Methoxypropylamin, 3-Ethoxypropylamin, 3-(2-Ethylhexoxy)propylamin oder 3-(2-Methoxyethoxy)propylamin, weiterhin Amine mit mehreren Aminogruppen wie insbesondere N,N-Dimethyl-1,3-diaminopropan, N-Methyl-1,2-ethandiamin, N-Methyl-1,3-propandiamin, N-(2-Aminopropyl)piperazin, N-(2-Aminoethyl)piperazin, N¹-(3-Dimethylamino)propyl-1,3-diaminopropan, weiterhin Aminosilane wie insbesondere 3-Aminopropyltrimethoxysilan, 3-Aminopropyltriethoxysilan, 3-Aminopropyldimethoxymethylsilan, N-(2-Aminoethyl)aminopropyltrimethoxysilan, N-(2-Aminoethyl)aminopropyltriethoxysilan, Bis(3-trimethoxysilyl)propyl)amin oder Bis(3-triethoxysilyl)propyl)amin.

Davon bevorzugt sind Propylamin, Isopropylamin, Butylamin, sek.Butylamin, tert.Butylamin, Hexylamin, Octylamin, 2-Ethylhexylamin, Cyclohexylamin, Benzylamin, Phenylethylamin, 2-Methoxyethylamin, 2-Ethoxyethylamin, 3-Methoxypropylamin, 3-Ethoxypropylamin, 3-(2-Methoxyethoxy)propylamin, N,N-Dimethyl-1,3-diaminopropan, 3-Aminopropyltrimethoxysilan, 3-Aminopropyltriethoxysilan, 3-Aminopropyldimethoxymethylsilan, N-(2-Aminoethyl)-aminopropyltrimethoxysilan oder N-(2-Aminoethyl)aminopropyltriethoxysilan.

Als Alkohol oder Thiol oder Amin der Formel (III) bevorzugt sind Alkohole oder Amine.

Als Alkohol oder Thiol oder Amin der Formel (III) bevorzugt sind weiterhin Aminosilane oder Mercaptosilane.

Das Hydroxysilan der Formel (I) ist bevorzugt ausgewählt aus der Gruppe bestehend aus 2-Methoxy-4-(2-trimethoxysilylethyl)cyclohexan-1-ol, 2-Ethoxy-4-(2-trimethoxysilylethyl)cyclohexan-1-ol, 2-Isopropoxy-4-(2-trimethoxysilylethyl)cyclohexan-1-ol, 2-Butoxy-4-(2-trimethoxysilylethyl)cyclohexan-1-ol, 2-Isobutoxy-4-(2-trimethoxysilylethyl)cyclohexan-1-ol, 2-Pentoxy-4-(2-trimethoxysilyl-ethyl)cyclohexan-1-ol, 2-Hexoxy-4-(2-trimethoxysilylethyl)cyclohexan-1-ol, 2-(2-Methoxyethoxy)-4-(2-trimethoxysilylethyl)cyclohexan-1-ol, 2-(2-Methoxyethoxy)ethoxy-4-(2-trimethoxysilylethyl)cyclohexan-1-ol, 2-Cyclohexoxy-4-(2-trimethoxysilylethyl)cyclohexan-1-ol, 2-Benzoxy-4-(2-trimethoxysilylethyl)cyclohexan-1-ol, und die entsprechenden Verbindungen, welche durch teilweise oder vollständige Umesterung der Trimethoxysilangruppen mit dem zur Herstellung verwendeten Alkohol der oben genannten Hydroxysilane erhalten werden, und 2-Propylamino-4-(2-trimethoxysilylethyl)cyclohexan-1-ol, 2-Isopropylamino-4-(2-trimethoxysilylethyl)cyclohexan-1-ol, 2-Butylamino-4-(2-trimethoxysilylethyl)cyclohexan-1-ol, 2-sek.Butylamino-4-(2-trimethoxysilylethyl)cyclohexan-1-ol, 2-tert.Butylamino-4-(2-trimethoxysilylethyl)cyclohexan-1-ol, 2-Hexylamino-4-(2-trimethoxysilylethyl)cyclohexan-1-ol, 2-Octylamino-4-(2-trimethoxysilylethyl)cyclohexan-1-ol, 2-(2-Ethylhexyl)amino-4-(2-trimethoxysilylethyl)cyclohexan-1-ol, 2-Cyclohexylamino-4-(2-trimethoxysilylethyl)cyclohexan-1-ol, 2-Benzylamino-4-(2-trimethoxysilylethyl)cyclohexan-1-ol, 2-Phenylethylamino-4-(2-trimethoxysilylethyl)cyclohexan-1-ol, 2-Methoxyethylamino-4-(2-trimethoxysilylethyl)cyclohexan-1-ol, 2-(2-Ethoxyethyl)amino-4-(2-trimethoxysilylethyl)cyclohexan-1-ol, 2-(3-Methoxypropyl)amino-4-(2-trimethoxysilylethyl)-cyclohexan-1-ol, 2-(3-Ethoxypropyl)amino-4-(2-trimethoxysilylethyl)cyclohexan-1-ol, 2-(3-(2-Methoxyethoxy)propyl)amino-4-(2-trimethoxysilylethyl)cyclohexan-1-ol, 2-(N,N-Dimethyl-3-aminopropyl)amino-4-(2-trimethoxysilylethyl)cyclohexan-1-ol, 2-(3-Trimethoxysilylpropyl)amino-4-(2-trimethoxysilylethyl)cyclohexan-1-ol, 2-(3-Trimethoxysilylpropylaminoethyl)amino-4-(2-trimethoxysilylethyl)cyclohexan-1-ol, 2-(3-Trimethoxysilylpropyl)mercapto-4-(2-trimethoxysilylethyl)-cyclohexan-1-ol, und die entsprechenden Verbindungen, welche Triethoxysilangruppen anstelle von Trimethoxysilangruppen aufweisen, sowie die entsprechenden Verbindungen, bei welchen der Silangruppen-haltige Substituent in 5-Stellung anstatt in 4-Stellung steht.

Davon bevorzugt sind 2-Methoxy-4-(2-trimethoxysilylethyl)cyclohexan-1-ol, 2-Ethoxy-4-(2-triethoxysilylethyl)cyclohexan-1-ol, 2-(2-Methoxyethoxy)ethoxy-4-(2-tris(2-(2-methoxyethoxy)ethoxy)silylethyl)cyclohexan-1-ol, 2-Hexylamino-4-(2-trimethoxysilylethyl)cyclohexan-1-ol, 2-Hexylamino-4-(2-triethoxysilylethyl)-cyclohexan-1-ol, 2-(3-Trimethoxysilylpropyl)amino-4-(2-trimethoxysilylethyl)-cyclohexan-1-ol, 2-(3-Triethoxysilylpropyl)amino-4-(2-triethoxysilylethyl)cyclohexan-1-ol, 2-(3-Trimethoxysilylpropylaminoethyl)amino-4-(2-trimethoxysilylethyl)cyclohexan-1-ol, 2-(3-Triethoxysilylpropylaminoethyl)amino-4-(2-triethoxysilylethyl)cyclohexan-1-ol, 2-(3-Trimethoxysilylpropyl)mercapto-4-(2-trimethoxysilylethyl)cyclohexan-1-ol, 2-(3-Triethoxysilylpropyl)mercapto-4-(2-triethoxysilylethyl)cyclohexan-1-ol, oder die entsprechenden Verbindungen, bei welchen der Silangruppen-haltige Substituent in 5-Stellung anstatt in 4-Stellung steht. Am meisten bevorzugt ist 2-Ethoxy-4(5)-(2-triethoxysilylethyl)cyclohexan-1-ol oder 2-Methoxy-4(5)-(2-trimethoxysilylethyl)cyclohexan-1-ol.

Gemische aus zwei Verbindungen, deren Silangruppen-haltiger Substituent in 4- beziehungsweise in 5-Stellung steht, sind mit der Schreibweise "4(5)" dargestellt.

Das Hydroxysilan der Formel (I) ist unter Ausschluss von Feuchtigkeit sehr lagerstabil. Bei Raumtemperatur wird über einen Zeitraum von mehreren Monaten kaum eine Abnahme der Reinheit festgestellt, und zwar nicht nur für solche mit Ethoxygruppen, sondern überraschenderweise auch für Methoxygruppen enthaltende Hydroxysilane der Formel (I), welche deutlich reaktiver sind.

Die Silangruppen des Hydroxysilans der Formel (I) haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen), wobei der entsprechende Alkohol, beispielsweise Ethanol im Fall von Ethoxysilangruppen, freigesetzt wird.

Bei der - zumindest partiellen - Hydrolyse von mindestens einem Hydroxysilan der Formel (I) werden Verbindungen mit mindestens einer Silanolgruppe der Formel (IV) erhalten.

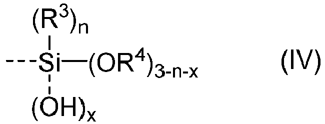

In der Formel (IV) steht x für 1 oder 2 oder 3, mit der Massgabe, dass x höchstens den Wert (3-n) aufweist. R³, R⁴ und n weisen die bereits genannten Bedeutungen auf.

Derartige hydrolysierte oder partiell hydrolysierte Verbindungen mit Silanolgruppen der Formel (IV) sind sehr reaktiv und können sehr schnell weiterreagieren, entweder durch Kondensation mit weiteren Silanolgruppen unter Bildung von Siloxangruppen (Si-O-Si-Gruppen) oder beispielsweise durch Kondensation mit Hydroxylgruppen eines Substrates.

Das Hydroxysilan der Formel (I) besitzt die Fähigkeit, eine starke Haftung zu diversen Substraten aufzubauen, beziehungsweise die Haftung von Zusammensetzungen enthaltend dieses Silan zu einem Substrat zu verbessern, beziehungsweise die Haftung von härtbaren Zusammensetzungen, welche auf eine das Hydroxysilan enthaltende Schicht appliziert werden, auf dieser Schicht zu verbessern.

Ein Hydroxysilan der Formel (I), welches zwei oder drei Silangruppen aufweist, besitzt zudem die Fähigkeit, mit sich selbst oder mit anderen Silangruppen-haltigen Zusammensetzungen als besonders guter Vernetzer zu wirken.

Das Hydroxysilan der Formel (I) wird verwendet als Haftvermittler oder Vernetzer für Klebstoffe oder Dichtstoffe oder Beschichtungen.

Als Klebstoff oder Dichtstoff oder Beschichtung geeignet sind insbesondere Zusammensetzungen, welche mindestens ein härtbares Bindemittel und optional weitere Bestandteile wie insbesondere Füllstoffe, Vernetzer, Weichmacher, Lösemittel, Katalysatoren, Haftvermittler, Trocknungsmittel, Stabilisatoren, Pigmente und/oder Rheologiehilfsmitteln enthalten.

Ein geeignetes härtbares Bindemittel enthält bevorzugt Reaktivgruppen ausgewählt aus Acrylatgruppen, Methacrylatgruppen, Epoxidgruppen, Isocyanatgruppen und Silangruppen.

Das härtbare Bindemittel ist bevorzugt ausgewählt aus Poly(meth)acrylaten, Polyisocyanaten, Isocyanatgruppen-haltigen Polyurethanpolymeren, Silangruppen-haltigen Polymeren, Isocyanat- und Silangruppen-haltigen Polyurethanpolymeren und Kombinationen davon.

Geeignete Poly(meth)acrylate sind insbesondere Methyl(meth)acrylat, Ethyl-(meth)acrylat, n-Butyl(meth)acrylat, n-Hexyl(meth)acrylat, 2-Ethylhexylmethacrylat, Lauryl(meth)acrylat, Stearyl(meth)acrylat, Cyclohexyl(meth)acrylat, Tetrahydrofuryl(meth)acrylat, Isobornyl(meth)acrylat, 2-Hydroxyethyl(meth)acrylat, Tris-(2-hydroxyethyl)isocyanurat-tri(meth)acrylat, Tris-(2-hydroxyethyl)-cyanurat-tri(meth)acrylat, N,N',N"-Tris-(meth)acryloyl-perhydrotriazin; zwei- oder mehrwertige Acrylate oder Methacrylate von aliphatischen Polyethern, Polyestern, Novolaken, Phenolen, aliphatischen oder cycloaliphatischen Alkoholen, Glykolen oder Polyesterglykolen, oder von mono- oder polyalkoxylierten Derivaten der vorgenannten Verbindungen, beispielsweise Ethylenglykol-di(meth)-acrylat, Tetraethylenglykol-di(meth)acrylat, Tripropylenglykol-di(meth)acrylat, Polyethylenglykol-di(meth)acrylat, Polypropylenglykol-di(meth)acrylat, 1,4-Butandiol-di(meth)acrylat, 1,6-Hexandiol-di(meth)acrylat, Neopentylglykol-di(meth)acrylat, Trimethylolpropan-tri(meth)acrylat, Pentaerithritol-tetra(meth)-acrylat, Dipentaerithritol-tetra(meth)acrylat, Dipentaerithritol-penta(meth)acrylat, Dipentaerithritol-hexa(meth)acrylat; zwei- oder mehr-wertige Acryl- oder Methacryl-funktionelle Polybutadiene, Polyisoprene oder Block-copolymere davon; Addukte aus zwei- oder mehrwertigen Epoxiden mit Acryl- oder Methacrylsäure; oder Polyurethan(meth)acrylate.

Geeignete Polyisocyanate sind insbesondere aliphatische, arylaliphatische, cycloaliphatische oder aromatische monomere Diisocyanate, insbesondere 1,6-Hexamethylendiisocyanat (HDI), 2,2,4- und 2,4,4-Trimethyl-1,6-hexamethylendiisocyanat (TMDI), 1-Methyl-2,4- und/oder -2,6-diisocyanatocyclohexan oder beliebige Gemische dieser Isomeren (HTDI oder H₆TDI), 1-Isocyanato-3,3,5-trimethyl-5-isocyanatomethyl-cyclohexan (Isophorondiisocyanat oder IPDI) oder Perhydro-2,4'- und/oder -4,4'-diphenylmethandiisocyanat (HMDI oder H₁₂MDI), 2,4- und/oder 2,6-Toluylendiisocyanat oder beliebige Gemische dieser Isomeren (TDI), 4,4'-, 2,4'- und/oder 2,2'-Diphenylmethandiisocyanat pder beliebige Gemische dieser Isomeren (MDI), 1,3- oder 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI) oder Dianisidindiisocyanat (DADI). Davon bevorzugt sind HDI, IPDI, MDI oder TDI. Geeignete Polyisocyanate sind weiterhin insbesondere Oligomere oder Derivate der genannten Diisocyanate, insbesondere solche abgeleitet von HDI, IPDI, MDI oder TDI, insbesondere im Handel erhältliche Typen, insbesondere HDI-Biurete, HDI-Isocyanurate, HDI-Uretdione, HDI-Iminooxadiazindione, HDI-Allophanate, IPDI-Isocyanurate, TDI-Oligomere, gemischte Isocyanurate auf Basis TDI/HDI, bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, oder Gemische aus MDI und MDI-Homologen (polymeres MDI oder PMDI). Die genannten oligomeren Polyisocyanate stellen in der Praxis üblicherweise Gemische von Substanzen mit unterschiedlichen Oligomerisierungsgraden und/oder chemischen Strukturen dar und weisen bevorzugt eine mittlere NCO-Funktionalität im Bereich von 2.1 bis 4.0 auf.

Geeignete Isocyanatgruppen-haltigen Polyurethanpolymere sind insbesondere Umsetzungsprodukte von mindestens einem Polyol mit einer überstöchiometrischen Menge von mindenstens einem Polyisocyanat, wobei als Polyol bevorzugt Polyetherpolyole, Polyesterpolyole, Polycarbonatpolyole oder Polyacrylatpolyole, besonders bevorzugt Polyetherpolyole, insbesondere Polyoxypropylenpolyole und/oder Polyoxyethylen-polyoxypropylen-Mischpolyole, verwendet werden, bevorzugt mit einem mittleren Molekulargewicht im Bereich von 500 bis 30'000 g/mol, bevorzugt 1000 bis 20'000 g/mol, insbesondere 1000 bis 15'000 g/mol, und wobei als Polyisocyanat bevorzugt die genannten monomeren Diisocyanate verwendet werden, bevorzugt MDI, TDI, HDI oder IPDI. Sie können hergestellt sein unter Mitverwendung von kleinen mehrfunktionellen Alkoholen wie insbesondere 1,4-Butandiol.

Geeignete Silangruppen-haltigen Polymere sind insbesondere kommerzielle Typen wie insbesondere Produkte unter den Handelsnamen MS Polymer™ (von Kaneka Corp.; insbesondere die Typen S203H, S303H, S227, S810, MA903 oder S943); MS Polymer™ bzw. Silyl™ (von Kaneka Corp.; insbesondere die Typen SAT010, SAT030, SAT200, SAX350, SAX400, SAX725, MAX450, MAX602 oder MAX951); Excestar^{®} (von Asahi Glass Co. Ltd.; insbesondere die Typen S2410, S2420, S3430 oder S3630); SPUR+* (von Momentive Performance Materials; insbesondere die Typen 1010LM, 1015LM oder 1050MM); Vorasil™ (von Dow Chemical Co.; insbesondere die Typen 602 oder 604); Desmoseal^{®} (von Bayer MaterialScience AG; insbesondere die Typen S XP 2636, S XP 2749, S XP 2774 oder S XP 2821); TEGOPAC^{®} (von Evonik Industries AG; insbesondere die Typen Seal 100, Bond 150 oder Bond 250); oder Geniosil^{®} STP (von Wacker Chemie AG; insbesondere die Typen E15 oder E35).

Geeignete Silangruppen-haltigen Polymere und/oder geeignete Isocyanat- und Silangruppen-haltigen Polyurethanpolymere sind weiterhin insbesondere Umsetzungsprodukte von Isocyanatgruppen-haltigen Polyurethanpolymeren, wie sie vorgängig beschrieben wurden, mit Aminosilanen oder Mercaptosilanen oder Hydroxysilanen, wobei bei der unterstöchiometrischen Umsetzung Isocyanatgruppen erhalten bleiben.

Der Klebstoff oder Dichtstoff oder die Beschichtung kann als einkomponentige Zusammensetzung oder als mehrkomponentige, insbesondere als zweikomponentige, Zusammensetzung vorliegen. Sie kann mit Feuchtigkeit oder durch den Kontakt eines Härters aushärten, gegebenenfalls mit Hilfe von Wärme. Als "einkomponentig" wird im vorliegenden Dokument eine Zusammensetzung bezeichnet, bei welcher alle Bestandteile der Zusammensetzung vermischt im gleichen Gebinde gelagert werden und welche insbesondere mit Feuchtigkeit härtbar ist.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet.

Der Klebstoff oder Dichtstoff kann bei Raumtemperatur eine pastöse Konsistenz aufweisen und in Form von Raupen auf ein Substrat aufgetragen werden, oder er kann bei Raumtemperatur eine flüssige Konsistenz aufweisen und flächig auf ein Substat aufgetragen werden, oder er kann bei Raumtemperatur fest sein und im aufgeheizten, geschmolzenen Zustand appliziert werden.

Die Beschichtung kann bei Raumtemperatur eine flüssige oder leicht pastöse Konsistenz aufweisen und flächig auf ein Substat aufgetragen werden, oder sie kann bei Raumtemperatur fest sein und im aufgeheizten, geschmolzenen Zustand appliziert werden. Typischerweise weist sie bei Raumtemperatur ein flüssige oder leicht pastöse Konsistenz auf und kann beispielsweise mittels Pinsel, Rolle, Spatel oder Kelle oder - auf ebenen Flächen - auch selbstverlaufend appliziert werden.

Der Klebstoff oder Dichtstoff oder die Beschichtung eignet sich für eine Vielzahl von Verwendungen, insbesondere als Fugendichtstoff, Schweiss- oder Bördelnahtdichtstoff, Parkettklebstoff, Montageklebstoff, Karrosserieklebstoff, Scheibenklebstoff, Sandwichelementklebstoff, Bodenbelag, Bodenbeschichtung, Balkonbeschichtung, Dachbeschichtung, Betonschutzbeschichtung, Parkhausbeschichtung sowie als Schutzanstrich gegen Korrosion oder als Versiegelung oder Anstrich.

Weiterhin geeignet ist der Klebstoff als Heissschmelzklebstoff, insbesondere als Kaschierklebstoff, Laminatklebstoff, Verpackungsklebstoff, Textilklebstoff oder Holzklebstoff.

Bevorzugt sind elastische Klebstoffe und/oder Dichtstoffe für die Fugenabdichtung oder für elastische Klebeverbindungen in Bau- oder Industrieanwendungen.

Bevorzugt sind weiterhin elastische Beschichtungen, sowie Lacke oder Versiegelungen.

Geeignete Substrate, auf welche der Klebstoff oder Dichtstoff oder die Beschichtung appliziert werden kann, sind insbesondere
- Glas, Glaskeramik, Siebdruckkeramik, Beton, Mörtel, Backstein, Ziegel, Gips oder Natursteine wie Granit oder Marmor;
- Metalle oder Legierungen, wie Aluminium, Eisen, Stahl oder Buntmetalle, oder oberflächenveredelte Metalle oder Legierungen, wie verzinkte oder verchromte Metalle;
- Leder, Textilien, Papier, Holz, mit Harzen, beispielsweise Phenol-, Melaminoder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.

Verklebt und/oder abgedichtet werden können zwei gleichartige oder zwei verschiedene Substrate.

Die Substrate können bei Bedarf vor dem Applizieren des Kleb- oder Dichtstoffs oder der Beschichtung vorbehandelt werden, insbesondere durch physikalische und/oder chemische Reinigungsverfahren oder das Aufbringen einer Haftvermittler-Lösung oder eines Primers.

Die Verwendung des Hydroxysilans der Formel (I) als Haftvermittler für Klebstoffe oder Dichtstoffe oder Beschichtungen kann dadurch erfolgen, dass das Hydroxysilan als Bestandteil einer Haftvermittler-Zusammensetzung auf ein Substrat aufgetragen wird, worauf, insbesondere nach einer geeigneten Ablüftzeit, der Klebstoff oder Dichtstoff oder die Beschichtung auf das vorbehandelte Substrat appliziert wird.

Die Verwendung des Hydroxysilans der Formel (I) als Haftvermittler oder Vernetzer für Klebstoffe oder Dichtstoffe oder Beschichtungen kann weiterhin dadurch erfolgen, dass das Hydroxysilan ein Bestandteil des Klebstoffs oder Dichtstoffs oder der Beschichtung ist.

In einer Ausführungsform der Verwendung ist das Hydroxysilan ein Bestandteil einer Haftvermittler-Zusammensetzung.

Ein weiterer Gegenstand der Erfindung ist dementsprechend eine Haftvermittler-Zusammensetzung enthaltend mindestens ein Hydroxysilan der Formel (I) wie vorgängig beschrieben und mindestens ein Lösemittel.

Geeignete Lösemittel sind insbesondere Methanol, Ethanol, Isopropanol, Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether,Toluol, Xylol, Heptan, Octan, Naphtha, White Spirit, Petrolether oder Benzin, insbesondere Solvesso™-Typen (von Exxon), weiterhin Methylenchlorid, Propylencarbonat, Butyrolacton, N-Methylpyrrolidon, N-Ethylpyrrolidon oder Wasser.

Optional enthält die Haftvermittler-Zusammensetzung weitere Bestandteile wie insbesondere Katalysatoren, weitere Silane, Titanate oder Zirkonate, oder gegebenenfalls Pigmente, Füllstoffe, Netzmittel, Polyisocyanate, Isocyanat- und/oder Silangruppen aufweisende Polyurethanpolymere oder Epoxidharze.

Eine Haftvermittler-Zusammensetzung, welche hauptsächlich aus Lösemitteln besteht und als zusätzliche Bestandteile insbesondere Silane und/oder Katalysatoren und/oder Titanate und/oder Zirkonate enthält, wird auch als Aktivator oder als Haftvermittler-Lösung bezeichnet. Eine solche Haftvermittler-Lösung wird typischerweise verwendet, um Substratoberflächen zu reinigen und diese gleichzeitig für den nachfolgenden Auftrag eines Klebstoffs oder Dichtstoffs oder einer Beschichtung so vorzubereiten, dass eine verbesserte Haftung zwischen dem Substrat und dem Klebstoff oder Dichtstoff oder der Beschichtung entsteht. Die Inhaltsstoffe in einer Haftvermittler-Lösung sind typischerweise so dosiert, dass nach dem Verdampfen der Lösemittel kein geschlossener Film auf der Substratoberfläche zurückbleibt.

Die Haftvermittler-Lösung wird typischerweise mittels einem Tuch, einem Filz oder einer ähnlichen Anordung in dünner Schicht auf eine Substratoberfläche aufgebraucht und gegebenenfalls anschliessend mit einem sauberen Tuch leicht abgewischt. Nach einer geeigneten Wartezeit wird der Klebstoff oder Dichtstoff oder die Beschichtung auf die so vorbehandelte Oberfläche aufgetragen und weist typischerweise eine verbesserte Haftung auf.

Eine Haftvermittler-Zusammensetzung, welche neben Lösemitteln und optional Silanen, Katalysatoren, Titanaten oder Zirkonaten zusätzlich eine filmbildende Komponente und gegebenenfalls Pigmente, Füllstoffe, Netzmittel oder weitere Additive enthält, wird auch als Primer bezeichnet. Als filmbildende Komponente geeignet sind insbesondere mono- und/oder oligomere aliphatische, cycloaliphatische, arylaliphatische oder aromatische Polyisocyanate, Isocyanat- und/oder Silangruppen aufweisende Polymere, oligomere Silan-Zubereitungen, oder Epoxidharze. Der Primer wird üblicherweise so appliziert, dass nach dem Verdampfen der Lösemittel ein geschlossener Film in einer Schichtdicke im Bereich von einigen Mikrometern bis zu einigen Hundert Mikrometern auf dem Substrat verbleibt. Ein Primer wird typischerweise dazu verwendet, die Haftung zwischen einem Substrat und einem Klebstoff und/oder Dichtstoff oder einer Beschichtung zu verbessern, indem der Primerfilm sowohl zum Substrat als auch zu der auf den Primerfilm aufgebrachten härtbaren Zusammensetzung Haftung aufbauen kann.

Der Primer wird typischerweise mit einem Pinsel oder einer Rolle in dünner Schicht auf eine Substratoberfläche aufgebracht. Nach einer geeigneten Wartezeit, während welcher das Lösemittel teilweise oder vollständig verdunstet, wird der Klebstoff oder Dichtstoff oder die Beschichtung auf die so vorbehandelte Oberfläche aufgetragen und weist typischerweise eine verbesserte Haftung auf.

In einer weiteren Ausführungsform der Verwendung ist das Hydroxysilan ein Bestandteil eines Klebstoffs oder Dichtstoffs oder einer Beschichtung.

Ein weiterer Gegenstand der Erfindung ist dementsprechend eine Zusammensetzung, welche als Klebstoff oder Dichtstoff oder als Beschichtung verwendbar ist, enthaltend mindestens ein Hydroxysilan der Formel (I) wie vorgängig beschrieben.

Optional enthält die Zusammensetzung weitere Bestandteile ausgewählt aus härtbaren Bindemitteln, Füllstoffen, Vernetzern, Weichmachern, Lösemitteln, Katalysatoren, weiteren Haftvermittlern, Trocknungsmitteln, Stabilisatoren, Pigmenten und Rheologiehilfsmitteln.

In einer Ausführungsform der Erfindung weist die Zusammensetzung nach der Aushärtung eine Bruchdehnung von mindestens 10 %, bevorzugt mindestens 30 %, insbesondere mindestens 50 %, auf. Dabei wird die Bruchdehnung an Hanteln mit einer Dicke von 2 mm, einer Länge von 75 mm bei einer Steglänge von 30 mm und einer Stegbreite von 4 mm gemäss DIN EN 53504 bei einer Zuggeschwindigkeit von 200 mm/min bestimmt.

Eine solche Zusammensetzung enthält bevorzugt mindestens ein härtbares Bindemittel ausgewählt aus Polyisocyanaten, Isocyanatgruppen-haltigen Polyurethanpolymeren, Silangruppen-haltigen Polymeren, Isocyanat- und Silangruppen-haltigen Polyurethanpolymeren und Kombinationen davon, wie vorgängig beschrieben.

Eine solche Zusammensetzung weist bevorzugt einen Gehalt an härtbarem Bindemittel im Bereich von 5 bis 90 Gewichts-%, insbesondere 10 bis 60 Gewichts-%, auf.

In einer weiteren Ausführungsform der Erfindung ist die Zusammensetzung eine Beschichtung in Form eines Lackes oder einer Versiegelung. Eine solche Beschichtung wird typischerweise in einer Schichtdicke im Bereich von 30 bis 800 µm Trockenfilm appliziert und enthält typischerweise mindestens ein Lösemittel wie die vorgängig erwähnten. Sie ist entweder weitgehend starr oder nur wenig elastisch und kann eine Oberfläche vor mechanischer oder witterungsbedingter Einwirkung oder vor dem Angriff von Chemikalien oder Lösemitteln schützen. Das Hydroxysilan der Formel (I) kann dabei als Haftvermittler bevorzugt in einer Menge im Bereich von 0.1 bis 10 Gewichts-% bezogen auf den Trockenfilm vorhanden sein. Insbesondere für den Fall, dass das Hydroxysilan der Formel (I) zwei oder drei Silangruppen aufweist, kann es als Vernetzer auch in einer höheren Menge vorhanden sein, insbesondere in einer Menge im Bereich von 10 bis 80 Gewichts-% bezogen auf den Trockenfilm.

Für den Fall, dass die Haftvermittler-Zusammensetzung oder die als Klebstoff, Dichtstoff oder Beschichtung verwendbare Zusammensetzung Isocyanatgruppen-haltige Bestandteile aufweist, kann das Hydroxysilan der Formel (I) mit diesen reagieren. Dadurch entsteht ein Silangruppen-haltiges Addukt, welches ebenfalls als Haftvermittler oder Vernetzer wirkt.

Geeignete weitere Bestandteile einer Haftvermittler-Zusammensetzung oder einer als Klebstoff, Dichtstoff oder Beschichtung verwendbaren Zusammensetzung sind insbesondere die Folgenden:
- Katalysatoren, insbesondere Verbindungen von Zinn, Eisen, Bismut, Zink, Mangan, Chrom, Kobalt, Kupfer, Nickel, Molybdän, Blei, Cadmium, Quecksilber, Antimon, Vanadium, Titan, Zirkonium oder Kalium, insbesondere Organozinn(IV)-Verbindungen wie Dibutylzinndiacetat, Dibutylzinndilaurat, Dimethylzinndilaurat, Dibutylzinndichlorid, Dibutylzinndiacetylacetonat oder Dioctylzinndilaurat, Bismut(III)-Komplexverbindungen, Zink(II)-acetat, Zink(II)-2-ethylhexanoat, Zink(II)-laurat, Zink(II)-acetylacetonat, Kobalt(II)-2-ethylhexanoat, Kupfer(II)-2-ethylhexanoat, Nickel(II)-naphthenat, Aluminiumlactat, Aluminiumoleat, Titan(IV)-Komplexverbindungen wie insbesondere Diisopropoxytitan-bis(ethylacetoacetat), Zirkonium(IV)-Komplexverbindungen oder Kaliumacetat; Stickstoff-haltige Verbindungen wie insbesondere 2,2'-Dimorpholinodiethylether, N-Ethyldiisopropylamin, N,N,N',N'-Tetramethylalkylendiamine, Pentamethylalkylentriamine oder höhere Homologe davon, Bis-(N,N-diethylaminoethyl)adipat, Tris-(3-dimethylaminopropyl)amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Alkylmorpholine, N,N'-Dimethylpiperazin, Guanidine, 4-Dimethylaminopyridin, N-Methylimidazol, N-Vinylimidazol oder 1,2-Dimethylimidazol, oder organische Ammoniumverbindungen wie Benzyltrimethylammoniumhydroxid oder alkoxylierte tertiäre Amine; oder Kombinationen der genannten Verbindungen, insbesondere von Metallverbindungen und Stickstoff-haltigen Verbindungen.
- weitere Silane, welche ebenfalls als Haftvermittler oder Vernetzer wirken können, wie insbesondere Aminosilane, Mercaptosilane, Epoxysilane, (Meth)acrylosilane, Isocyanatosilane, Carbamatosilane, Alkylsilane, S-(Alkylcarbonyl)mercaptosilane oder Iminosilane oder oligomere Formen dieser Silane.
- Härter oder Vernetzer für die genannten Bindemittel, insbesondere Polyole, Polyamine, Aminoalkohole, Aldimine, Oxazolidine oder Aminosilane.
- Anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Gimmer, Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln.
- Fasern, insbesondere Glasfasern, Kohlefasern, Metallfasern, Keramikfasern, Kunststofffasern wie Polyamidfasern oder Polyethylenfasern oder Naturfasern.
- Farbstoffe.
- Pigmente, insbesondere Titandioxid oder Eisenoxide.
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- oder Sulfonsäureester, Polybutene oder von natürlichen Fetten oder Ölen abgeleitete Fettsäuremethyl- oder -ethylester, auch "Biodiesel" genannt.
- Nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO).
- Lösemittel.
- Rheologie-Modifizierer, insbesondere Verdickungsmittel oder Thixotropiermittel, zum Beispiel Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether und hydrophob modifizierte Polyoxyethylene.
- Trocknungsmittel, insbesondere Molekularsiebe, Calciumoxid, hochreaktive Isocyanate wie p-Tosylisocyanat, monomere Diisocyanate, Mono-Oxazolidine wie Incozol^{®} 2 (von Incorez), Orthoameisensäureester, Alkoxysilane wie Tetraethoxysilan oder Organoalkoxysilane wie Vinyltrimethoxysilan.
- Stabilisatoren gegen Oxidation, Wärme, Licht- und UV-Strahlung.
- flammhemmende Substanzen.
- oberflächenaktive Substanzen, insbesondere Netzmittel, Verlaufsmittel, Entlüftungsmittel oder Entschäumer.
- Biozide wie beispielsweise Algizide, Fungizide oder das Pilzwachstum hemmende Substanzen.

Aus der beschriebenen Verwendung resultiert ein verklebter oder abgedichteter oder beschichteter Artikel. Dieser Artikel kann ein Bauwerk oder ein Teil davon sein, insbesondere ein Bauwerk des Hoch- oder Tiefbaus, oder ein industrielles Gut oder ein Konsumgut sein, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, ein Anbauteil davon sein

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".
**¹H-NMR-Spektren** wurden in CDCl₃ auf einem Spektrometer des Typs Bruker Ascend 400 bei 400.14 MHz gemessen; die chemischen Verschiebungen δ sind angegeben in ppm relativ zu Tetramethylsilan (TMS), die Kopplungskonstanten J sind angegeben in Hz.
**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen; die Absorptionsbanden sind in Wellenzahlen (cm⁻¹) angegeben (Messfenster: 4000-650 cm⁻¹).
**Gaschromatogramme** (GC) wurden gemessen im Temperaturbereich von 60 bis 320 °C mit einer Aufheizrate von 15 °C/min und 10 min Verweilzeit bei 320 °C. Die Injektortemperatur betrug 250 °C. Es wurde eine Zebron ZB-5 Säule verwendet (L = 30 m, ID = 0.25 mm, dj = 0.5 µm) bei einem Gasfluss von 1.5 ml/Min. Die Detektion erfolgte mittels Flammenionisation (FID), wobei die Signale via Flächenprozent-Methode ausgewertet wurden.

### 1. Hydroxysilane:

### Hydroxysilan 1: 2-Ethoxy-4(5)-(2-triethoxysilylethyl)cyclohexan-1-ol

In einem Rundkolben wurden 150.00 g Ethanol und 0.50 g Vinyltriethoxysilan unter Stickstoffatmosphäre während 15 min bei 50 °C gerührt. Anschliessend wurden 180.00 g (624 mmol) *β*-(3,4-Epoxycyclohexyl)ethyltriethoxysilan (CoatOSil^{®} 1770, von Momentive) und 3.06 g Aluminium(III)isopropoxid zugegeben und unter Stickstoffatmosphäre während 16 h bei 100 °C am Rückfluss gerührt. Dann wurde die trübe Reaktionsmischung auf Raumtemperatur abgekühlt, filtriert und überschüssiges Ethanol bei 80 °C und 10 mbar am Rotationsverdampfer entfernt. Es wurde ein farbloses flüssiges Produkt erhalten. Das Produkt wies nach der Herstellung eine Reinheit von 92 Gewichts-% auf (bestimmt mittels Gaschromatographie). Nach 3 Monaten Lagerung unter Feuchtigkeitsausschluss bei Raumtemperatur war die Reinheit unverändert. FT-IR: 3444 (O-H), 2973, 2925, 2882, 2735, 1483, 1443, 1389, 1347, 1294, 1263, 1212, 1165, 1100, 1073, 1012, 953, 885, 860, 767, 710, 677.

¹H-NMR: δ 3.81 (m, 6 H, Si-O-C*H*₂-CH₃), 3.68 und 3.56 (2xm, 2x0.5 H, (OH)C^{cycl}*H*), 3.64 und 3.43 (2xm, 2x1 H, C^{cycl}H-O-C*H*₂-CH₃), 3.27 und 3.13 (2xm, 2x0.5 H, C^{cycl}*H*-O-CH₂-CH₃), 2.50 (m, 1 H, C^{cycl}H), 1.80, 1.64 und 1.48 (3xm, 6 H, C^{cycl}H₂), 1,41 (m, 2 H, C^{cycl}H-C*H*₂-CH₂-Si), 1.22 (m, 12 H, Si-O-CH₂-C*H*₃), 0.61 (m, 2 H, C^{cycl}H-CH₂-C*H*₂-Si).

GC: Es wurden vier Peaks bei Retentionszeiten von 12.57 min bis 12.82 min mit insgesamt 92 Flächen-% detektiert, welche den Diastereomeren von 2-Ethoxy-4-(2-triethoxysilylethyl)cyclohexan-1-ol und 2-Ethoxy-5-(2-triethoxy-silylethyl)cyclohexan-1-ol zugeordnet und für die Reinheit zusammengezählt wurden.

### Hydroxysilan 2: 2-Methoxy-4(5)-(2-trimethoxysilylethyl)cyclohexan-1-ol

In einem Rundkolben wurden 104.35 g Methanol und 0.39 g Vinyltrimethoxysilan unter Stickstoffatmosphäre während 15 min bei 50 °C gerührt. Dann wurden 153.74 g (624 mmol) *β*-(3,4-Epoxycyclohexyl)ethyltrimethoxysilan (Silquest^{®} A-186, von Momentive) und 3.06 g Aluminium(III)isopropoxid zugegeben und die trübe Mischung in Portionen zu 60 g im Mikrowellenreaktor jeweils während 30 min bei 140 °C und einem Druck von ca. 12 bar zur Reaktion gebracht. Anschliessend wurden die vereinigten trüben Reaktionsmischungen auf Raumtemperatur abgekühlt, filtriert und überschüssiges Methanol bei 80 °C und 10 mbar am Rotationsverdampfer entfernt. Es wurde ein farbloses flüssiges Produkt erhalten.

Das Produkt wies nach der Herstellung eine Reinheit von 91 Gewichts-% auf (bestimmt mittels Gaschromatographie). Nach 3 Monaten Lagerung unter Feuchtigkeitsausschluss bei Raumtemperatur war die Reinheit unverändert. FT-IR: 3456 (O-H), 2924, 2839, 1454, 1411, 1381, 1349, 1292, 1270, 1190, 1157, 1077, 997, 935, 908, 889, 874, 776, 710, 675.

¹H-NMR: δ 3.73 und 3.61 (2xm, 2x0.5 H, (OH)C^{cycl}*H*), 3.57 (d, 9 H, Si-O-C*H*₃), 3.37 (d, 3 H, C^{cycl}H-O-C*H*₃), 3.20 und 3.07 (2xm, 2x0.5 H, C^{cycl}*H*-O-CH₃), 2.60 (m, 1 H, C^{cycl}H), 1.82, 1.72, 1.63 und 1.46 (4xm, 6 H, C^{cycl}H₂), 1.39 (q, 2 H, C^{cycl}H-C*H*₂-CH₂-Si), 0.62 (m, 2 H, C^{cycl}H-CH₂-C*H*₂-Si).

GC: Es wurden zwei Peaks bei Retentionszeiten von 11.57 min bis 11.68 min mit insgesamt 91 Flächen-% detektiert, welche den Diastereomeren von 2-Methoxy-4-(2-trimethoxysilylethyl)cyclohexan-1-ol und 2-Methoxy-5-(2-trimethoxysilylethyl)cyclohexan-1-ol zugeordnet und für die Reinheit zusammengezählt wurden.

**Hydroxysilan 3:** Gemisch enthaltend 2-(2-Methoxyethoxy)ethoxy-4(5)-(2-tris(2-(2-methoxyethoxy)ethoxy)silylethyl)cyclohexan-1-ol, 2-(2-Methoxyethoxy)ethoxy-4(5)-(2-ethoxy-bis(2-(2-methoxyethoxy)ethoxy)silylethyl)cyclohexan-1-ol und 2-(2-Methoxyethoxy)ethoxy-4(5)-(2-diethoxy-(2-(2-methoxyethoxy)-ethoxy)silylethyl)cyclohexan-1-ol

In einem Rundkolben wurden 117.04 g Methyldiglykol (2-(2-Methoxyethoxy)-ethanol), 50.00 g (203 mmol) *β*-(3,4-Epoxycyclohexyl)ethyltrimethoxysilan (Silquest^{®} A-186, von Momentive) und 0.50 g Aluminium(III)isopropoxid unter Stickstoffatmosphäre während 1 h bei 120 °C gerührt. Anschliessend wurde bei gleichbleibender Temperatur während 2 h bei 400 mbar, weiteren 2 h bei 300 mbar und weiteren 3 h bei 150 mbar über einen ungekühlten Destillationsaufsatz ein klares Destillat aufgefangen, welches im FT-IR als fast reines Methanol mit Spuren von Methyldiglykol identifiziert wurde. Die Reaktionsmischung wurde während 24 Stunden bei 140 °C und 50 mbar weitergerührt, bis kein Destillat mehr aufgefangen werden konnte. Schliesslich wurde das überschüssige Methyldiglykol bei 120 °C und 0.5 mbar entfernt. Es wurde ein farbloses flüssiges Produkt erhalten.

FT-IR: 3473 (O-H), 2923, 2874, 2820, 1454, 1411, 1354, 1329, 1292, 1248, 1198, 1086, 1028, 958, 847, 770, 715, 681.

**Hydroxysilan 4:** 2-Hexylamino-4(5)-(2-triethoxysilylethyl)cyclohexan-1-ol In einem Rundkolben wurden 17.37 g Hexylamin und 0.20 g Vinyltriethoxysilan unter Stickstoffatmosphäre während 15 min bei 50 °C gerührt. Anschliessend wurden 45.00 g (156 mmol) *β*-(3,4-Epoxycyclohexyl)ethyltriethoxysilan (CoatOSil^{®} 1770, von Momentive) und 0.15 g Aluminium(III)acetylacetonat zugegeben und unter Stickstoffatmosphäre während 16 h bei 110 °C am Rückfluss gerührt. Dann wurde überschüssiges Hexylamin während 1 h bei 80 °C und 10 mbar am Rotationsverdampfer entfernt. Es wurde ein farbloses flüssiges Produkt erhalten.

Das Produkt wies nach der Herstellung eine Reinheit von 97.3 Gewichts-% auf (bestimmt mittels Gaschromatographie). Nach 3 Monaten Lagerung unter Feuchtigkeitsausschluss bei Raumtemperatur war die Reinheit unverändert. FT-IR: 3297 (OH), 3152 (NH), 2971, 2924, 2882, 2857, 2735, 1613, 1454, 1410, 1389, 1365, 1294, 1166, 1101, 1075, 954, 906, 880, 767, 674. ¹H-NMR: δ 3.81 (m, 6 H, Si-O-C*H*₂-CH₃), 3.40 und 3.21 (2xm, 2x0.5 H, (OH)C^{cycl}*H*), 2.73 (m, 1 H, (C₆H₁₃₋NH)C^{cycl}*H*), 2.46 und 2.38 und 2.24 (m, 2 H, (C₅H₁₁-C*H₂*NH)C^{cycl}*)*, 1.95 bis 1.25 (m, 17 H, 1x (R)₃C^{cycl}*H*, 3x (R)₂C^{cycl}*H₂*, CH₃-C*H₂*-C*H₂*-C*H₂*-C*H₂*-CH₂-NHR, 1x (R)₂HC^{cycl}-C*H₂*-CH₂-Si), 1.22 (m, 9 H, Si-O-CH₂-C*H₃*), 0.89 (t, 3 H, (C*H₃*-C₄H₈-NH)C^{cycl}), 0.61 (m, 2 H, C^{cycl}H-CH₂-C*H₂*-Si). GC: Es wurden vier Peaks bei Retentionszeiten von 15.21 min bis 15.73 min mit insgesamt 97.3 Flächen-% detektiert, welche den Diastereomeren von 2-Hexylamino-4(5)-(2-triethoxysilylethyl)cyclohexan-1-ol zugeordnet und für die Reinheit zusammengezählt wurden. Zusätzlich wurden zwei Peaks bei Retentionszeiten von 11.30 min und 11.34 min mit insgesamt 2.7 Flächen-% detektiert, welche den Diastereomeren von *β*-(3,4-Epoxycyclohexyl)ethyltriethoxy-silan (Edukt) zugeordnet wurden.

### 2. Haftvermittler-Zusammensetzungen

### Haftvermittlerlösung HL1 bis HL4:

Es wurden vier Haftvermittlerlösungen hergestellt, indem jeweils 1.0 Gewichts-% Hydroxysilan 1 (= Haftvermittler HL1) bzw. 1.0 Gewichts-% Hydroxysilan 2 (= Haftvermittler HL2) bzw. 1.0 Gewichts-% Hydroxysilan 3 (= Haftvermittler HL3) bzw. 1.0 Gewichts-% Hydroxysilan 4 (= Haftvermittler HL4) in Lösemittel gelöst wurde. Für HL1 sowie HL4 wurde dabei absolutes Ethanol benutzt, für HL2 absolutes Methanol und für HL3 Essigsäure-ethylester. Die erhaltenen Haftvermittlerlösungen HL1 bis HL4 wurden jeweils als Aktivator auf Glas verwendet. Dazu wurden Glasplatten (Floatglas; Firma Rocholl, Schönbrunn, Deutschland) mit den Massen 10 x 15 cm auf der Luftseite längsseitig so mit Distanzband beklebt, dass jeweils drei Glasbahnen von je 2 x 13 cm erhalten wurden. Jede Bahn wurde mit Aceton gereinigt und anschliessend entweder einmal mit einem mit Haftvermittlerlösung benetzten Hygienetuch abgewischt oder einmal mit einem mit dem jeweiligen benutzten Lösemittel benetzten Hygienetuch abgewischt (Referenzen). Nach einer Ablüftzeit von 2 h im NK wurde pro Bahn 7.8 g eines MDI-Polymers, dessen Herstellung nachfolgend beschrieben ist, in einer Schichtdicke von ca. 3 mm aufgetragen. Die Glasplatten wurden im NK aufbewahrt.

Nach 4 Tagen im NK war das MDI-Polymer vollständig durchgehärtet. Auf der nur mit den Lösemitteln behandelten Bahnen liess sich das ausgehärtete MDI-Polymer mit wenig Kraftaufwand vom Glasuntergrund wegziehen. Es wies keine gute Haftung auf dem Glas auf. Auf den mit den Haftvermittlerlösungen HL1 bzw HL2 bzw. HL3 bzw. HL4 behandelten Bahnen konnte das ausgehärtete MDI-Polymer nicht vom Glasuntergrund abgezogen werden. Auch nach mehreren Schnitten quer zur Bahnrichtung bis auf den Glasuntergrund, mit welchen das Polymer vom Glas weggeschnitten wurde, und senkrecht nach oben gerichtetem Weg-ziehen der Polymerbahn liess sich das MDI-Polymer nicht vom Glasuntergrund lösen.

Das verwendete MDI-Polymer wurde hergestellt, indem unter Feuchtigkeitsausschluss 845 g Polyol Acclaim^{®} 4200 N (Polypropylenoxid-Diol, OH-Zahl 28.5 mg KOH/g, von Bayer) und 115 g 4,4'-Methylendiphenyldiisocyanat (MDI; Desmodur^{®} 44 MC L, von Bayer) nach bekanntem Verfahren bei 80 °C zu einem Polyurethanpolymer mit einem titrimetrisch bestimmten Gehalt an freien Isocyanat-Gruppen von 1.96 Gewichts-% umgesetzt wurden. Das Produkt wurde auf Raumtemperatur abgekühlt und unter Ausschluss von Feuchtigkeit aufbewahrt.

## Patentansprüche

1. Verwendung eines Hydroxysilans der Formel (I) 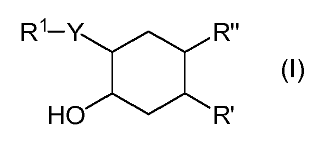 als Haftvermittler oder Vernetzer für Klebstoffe oder Dichtstoffe oder Beschichtungen,
wobei
entweder R' für einen Rest der Formel (II) und R" für einen Wasserstoff-Rest oder R' für einen Wasserstoff-Rest und R" für einen Rest der Formel (II) stehen; 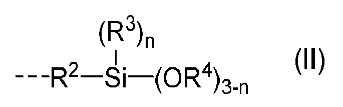 R¹ für einen aliphatischen oder cycloaliphatischen oder arylaliphatischen Kohlenwasserstoff-Rest mit 1 bis 18 C-Atomen, welcher gegebenenfalls Heteroatome in Form von Ether-Sauerstoff, Ester-Sauerstoff, Thioether-Schwefel oder sekundärem oder tertiärem Amin-Stickstoff aufweist, und welcher gegebenenfalls eine Silangruppe aufweist, steht;
R² für einen linearen oder verzweigten Alkylen- oder Cycloalkylen-Rest mit 1 bis 20 C-Atomen, gegebenenfalls mit aromatischen Anteilen, und gegebenenfalls mit einem oder mehreren Heteroatomen, steht;
R³ für einen Alkyl-Rest mit 1 bis 8 C-Atomen steht;
R⁴ für einen aliphatischen oder cycloaliphatischen oder arylaliphatischen Kohlenwasserstoff-Rest mit 1 bis 12 C-Atomen, welcher gegebenenfalls einen oder zwei Ether-Sauerstoffe aufweist, steht;
Y für O oder für S oder NR⁰ steht, wobei R⁰ für ein Wasserstoffatom oder für einen eine Silangruppe aufweisenden Alkyl-Rest mit 1 bis 12 C-Atomen steht; und
n für 0 oder 1 oder 2 steht.

2. Verwendung gemäss Anspruch 1, **dadurch gekennzeichnet, dass** Y für O oder für NR⁰ steht.

3. Verwendung gemäss Anspruch 2, **dadurch gekennzeichnet, dass** Y für O und R¹ für einen aliphatischen oder cycloaliphatischen oder arylaliphatischen Kohlenwasserstoff-Rest mit 1 bis 12 C-Atomen, welcher gegebenenfalls ein oder zwei Ether-Sauerstoffe aufweist, stehen.

4. Verwendung gemäss Anspruch 2, **dadurch gekennzeichnet, dass** Y für NR⁰, R⁰ für ein Wasserstoffatom und R¹ für einen aliphatischen oder cycloaliphatischen oder arylaliphatischen Kohlenwasserstoff-Rest mit 1 bis 12 C-Atomen, welcher gegebenenfalls ein oder zwei Ether-Sauerstoffe oder ein oder zwei sekundäre oder tertiäre Aminogruppen aufweist, stehen.

5. Verwendung gemäss Anspruch 1, **dadurch gekennzeichnet**, Y für S oder NR⁰ und R¹ für einen aliphatischen Kohlenwasserstoffrest mit 1 bis 12 C-Atomen, welcher eine Silangruppe und gegebenenfalls eine sekundäre Aminogruppe aufweist, stehen.

6. Verwendung gemäss einem der vorhergehenden Ansprüche, **dadurch gekennzeichnet, dass** R² für einen 1,2-Ethylen-Rest steht.

7. Verwendung gemäss einem der vorhergehenden Ansprüche, **dadurch gekennzeichnet, dass** R⁴ für einen Methyl-Rest oder für einen Ethyl-Rest steht.

8. Verwendung gemäss einem der vorhergehenden Ansprüche, **dadurch gekennzeichnet, dass** n für 0 oder 1 steht.

9. Verwendung gemäss einem der vorhergehenden Ansprüche, **dadurch gekennzeichnet, dass** der Klebstoff oder Dichtstoff oder die Beschichtung mindestens ein härtbares Bindemittel enthält.

10. Verwendung gemäss einem der vorhergehenden Ansprüche, **dadurch gekennzeichnet, dass** das Hydroxysilan als Bestandteil einer Haftvermittler-Zusammensetzung auf ein Substrat aufgetragen wird, worauf, insbesondere nach einer geeigneten Ablüftzeit, der Klebstoff oder Dichtstoff oder die Beschichtung auf das vorbehandelte Substrat appliziert wird.

11. Verwendung gemäss einem der Ansprüche 1 bis 9, **dadurch gekennzeichnet, dass** das Hydroxysilan ein Bestandteil des Klebstoffs oder Dichtstoffs oder der Beschichtung ist.

12. Haftvermittler-Zusammensetzung enthaltend mindestens ein Hydroxysilan der Formel (I) wie in einem der Ansprüche 1 bis 8 beschrieben und mindestens ein Lösemittel.

13. Zusammensetzung, welche als Klebstoff oder Dichtstoff oder Beschichtung verwendbar ist, enthaltend mindestens ein Hydroxysilan der Formel (I) wie in einem der Ansprüche 1 bis 8 beschrieben.

14. Zusammensetzung gemäss Anspruch 13, **dadurch gekennzeichnet, dass** sie nach der Aushärtung eine Bruchdehnung von mindestens 10 % aufweist.

15. Zusammensetzung gemäss Anspruch 13, **dadurch gekennzeichnet, dass** sie eine Beschichtung in Form eines Lackes oder einer Versiegelung darstellt.
